# EUROPÄISCHE PATENTSCHRIFT

(11) **EP 1 785 789 B1**
(45) Veröffentlichungstag und Bekanntmachung des Hinweises auf die Patenterteilung: **13.10.2010**
(21) Anmeldenummer: 06017749.0
(22) Anmeldetag: 25.08.2006
(51) Int. Cl.: G05B 19/042, A61G 7/018

(54) **Verfahren und Vorrichtung zum Programmieren und Steuern einer Elektrogeräteanordnung eines Möbels**
Method and device for programming and controlling an electric equipment system of a piece of furniture
Procédé et dispositif destinés à la programmation et à la commande d'un agencement d'appareils électriques d'un meuble

(30) Priorität: 15.11.2005 DE 102005054843
(43) Veröffentlichungstag der Anmeldung: 16.05.2007
(73) Patentinhaber: Dewert Antriebs- und Systemtechnik GmbH, 32278 Kirchlengern (DE)
(72) Erfinder: Langejürgen, Stefan, 32602 Vlotho (DE); Loley, Steffen, 48565 Steinfurt (DE)
(74) Vertreter: Specht, Peter

(56) Entgegenhaltungen:
- EP-A2- 0 787 475
- US-A- 5 168 441
- US-A1- 2003 184 595
- SVEN LINNMAN: "M3S: The Local Network for Electric Wheelchairs and Rehabilitation Equipment" IEEE TRANSACTIONS ON REHABILITATION ENGINEERING, vol. 4, no. 3, 1 September 1996 (1996-09-01), pages 188-192, XP011053803

## Beschreibung

Die Erfindung betrifft ein Verfahren und Vorrichtung zum Programmieren und Steuern einer Elektrogeräteanordnung eines Möbels.

Derartige Elektroanordnungen sind in der Form von unterschiedlichen elektromotorischen Antriebskonfigurationen zur Verstellung von Möbeln im Zusammenhang mit weiteren elektrischen Verbrauchern bekannt, beispielsweise Lampen, Heizungen, Massagegeräte und dergleichen. Diese Geräte sind auf Grund der verschiedenen Möbelkonstruktionen entsprechend angepasst und von großer Vielfalt. Dementsprechend umfangreich sind auch die zugehörigen Steuerungen mit Stromversorgungen, Bedienungsgeräten und mannigfaltigen Anschlussausführungen der zusammenzuschaltenden Einrichtungen.

Unterschiedliche Standardisierungsmaßnahmen sind bekannt, welche die Vielzahl von Anschlusstypen einerseits reduzieren und andererseits eine Möglichkeit schaffen, Elektrogeräteanordnungen flexibler zu gestalten, so zum Beispiel Nachrüstung und einfacher Zusammenbau.

In dem Artikel "MS3: The Local Network for Electric Wheelchairs and Rehabilitation Equipment" von Sven Linnman, erschienen in IEEE Transactions on Rehabilitation Engineering, Vol. 4, No. 3, p. 188-192 (1996), wird ein Verfahren gemäß dem Oberbegriff des Anspruchs 1 beschrieben.

Als weiteres Beispiel zur Illustration sei die DE 20107 726 U1 genannt, welche eine Einrichtung zur Steuerung von elektrischen Einrichtungen von Möbeln in einer Modulbauweise beschreibt, wobei die Module zusammensteckbar sind und Datenübertragungsleitungen und Stromversorgungsleitungen besitzen. Die Datenübertragungsleitungen bilden ein Bussystem, an das in den einzelnen Modulen Datenverarbeitungseinrichtungen angeschlossen sind. Weiterhin enthalten die Module Steuerschaltungen für Verbraucher, an mindestens ein Modul ist ein Bediengerät anschließbar, bzw. ein Modul enthält einen Fernsteuerempfänger.

Es besteht der Bedarf, Verfahren für solche Anordnungen zu vereinfachen und noch flexibler hinsichtlich des Anschließens und Steuerns weiterer Geräte zu gestalten.

Weiterhin besteht der Bedarf, derartige Verfahren für Elektrogeräteanordnungen auch bei Möbeln in Bereichen einzusetzen, für die besondere Sicherheitsvorschriften gelten, wie zum Beispiel im Pflege- und Hospitalbereich.

Die Aufgabe der vorliegenden Erfindung besteht darin, das Verfahren und die Vorrichtung der gattungsgemäßen Art zu verbessern,

Erfindungsgemäß wird diese Aufgabe durch ein Verfahren nach Anspruch 1 und eine Vorrichtung nach Anspruch 7 gelöst.

Vorteilhafte Ausgestaltungen und Weiterbildungen der Erfindung sind Gegenstand der Unteransprüche.

Die Erfindung schafft ein Verfahren zum Programmieren und Steuern einer Elektrogerätcanordnung eines Möbels, wobei zum Programmieren von Funktionen und zum Steuern der Elektrogeräteanordnung - die wenigstens eines oder mehrere Elektrogeräte umfasst - in vorteilhafter Weise eine grafische Programmieroberfläche verwendet wird, welche auf einer Anzeigeeinrichtung einer PC-Einheit oder eines anderen Programmiergerätes angezeigt wird.

Die graphische Benutzeroberfläche erleichtert in entscheidender Weise die Programmierung derart weiter, dass sie auch von weniger qualifiziertem Personal durchführbar ist. Zwar sind derartige graphische Benutzeroberflächen an sich bekannt. Ihr Einsatz im Bereich der Ansteuerung von Elektrogeräten von Möbeln wurde aber nicht in Erwägung gezogen, insbesondere nicht in folgender übersichtlicher und damit besonders leicht handhabbarer Ausgestaltung:
- einem Menüabschnitt zur Funktionsauswahl;
- einem Funktionsabschnitt zur Zusammenstellung von Programmen;
- einem Bildabschnitt zur Anzeige von Bildern; und
- einem Statusabschnitt zur Statusanzeige.

Vorzugsweise erzeugt die grafische Programmieroberfläche Scripte zum Steuern der Busteilnehmer.

Es ist ferner zweckmäßig und vorteilhaft - da leicht verständlich und intuitiv bedienbar -, wenn Terme aus dem Menüabschnitt in den Funktionsabschnitt mittels grafischer Bedienelemente, vorzugsweise Maus und/oder Touchscreen, übernommen werden können.

Sodann ist es zweckmäßig, wenn in dem Funktionsabschnitt dargestellte und/oder zusammengestellte Programme oder Programmabschnitte mittels grafischer Bedienelemente, vorzugsweise Maus und/oder Touchscreen, zumindest einem Bild oder Abschnitte davon auf dem Bildabschnitt zugeordnet werden.

In einer eingangs erwähnten jedoch nicht näher dargestellten Ausführungsform einer Elektrogeräteanordnung für ein Möbel kann diese Elektrogeräteanordnung aus einer oder mehreren Einzelgeräten bestehen Somit kann die Elektrogeräteanordnung beispielswreise aus mindestens einer Steuereinheit, mindestens einer Handbedienung, mindestes einem übergeordneten Schalt- und Bedienpult, mindestens einem elektromotorischen Antrieb, mindestens einer Stromversorgungseinheit oder Kombinationen daraus bestehen.

Es können jedoch auch Einzelgeräteanordnungen oder deren Kombinationen zu einer oder zu mehreren Baueinheiten zusammengefügt sein.

In Weiterführung dieser Ausführungsform kann mindestens eine Steuereinheit oder mindestens eine Handbedienung eine integrierte Mikroprozessoreinheit mit eventuell einer Datenspeichereinheit aufweisen. Die Komponenten der Steuerung können auch über ein Bussystem miteinander verknüft sein bzw. kommunizieren.

Dabei kann das Programm und/oder die Daten über eine vorgesehene Schnittstelle mittels eines Programmiergerätes, eines Eingabegerätes oder eines Speichergerätes erstellt, verändert oder ausgetauscht werden.

Weiterhin ist es denkbar, das der mindestens eine elektromotorische Antrieb ein linear und/oder rotierend verfahrendes Abtriebsglied aufweist, wobei ein oder mehrere Antriebszüge und/oder Motore in einem gemeinsamen Gehäuse eingesetzt sein können.

Die zuvor genannten Ausführungen sind besonders geeignet zum Einsatz in Betten, Liegen, Behandlungsgeräte und Sesseln, die sowohl als häusliches Möbel oder als Pflegemöbel bzw. als Behandlungsgerät für Pflegestationen, Krankenhaus und Intensivversorgung für Patienten ausgebildet sind.

Nachfolgend wird die Erfindung anhand der in den schematischen Figuren der Zeichnung angegebenen Ausführungsbeispiele näher erläutert. Es zeigt dabei:
- Figur 1: ein Flussdiagramm eines Beispiels, welches nicht Teil der beanspruchten Erfindung ist;
- Figur 2: ein Flussdiagramm eines Abschnitts des Beispiels nach Fig. 1;
- Figur 3: ein Blockschaltbild eines Ausführungsbeispiels einer erfindungsgemäßen Anordnung;
- Figur 4: ein Blockschaltbild eines Ausiuhrungsbeispiels eines Busteilnehmers;
- Figur 5: ein Ausflxhrungsbeispiel von Datenpaketen;
- Figur 6: eine schematische Darstellung eines Beispiels einer Programmieroberfläche; und
- Figur 7: ein schematisches Blockschaltbild eines Beispiels zur Erläuterung der Programmieroberfläche nach Fig. 6.

Gleiche Bezugszeichen in den Figuren bezeichnen gleiche oder ähnliche Bauteile mit gleicher oder ähnlicher Funktion.

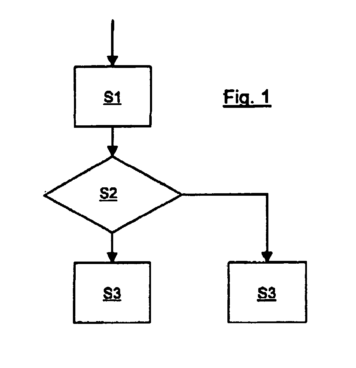

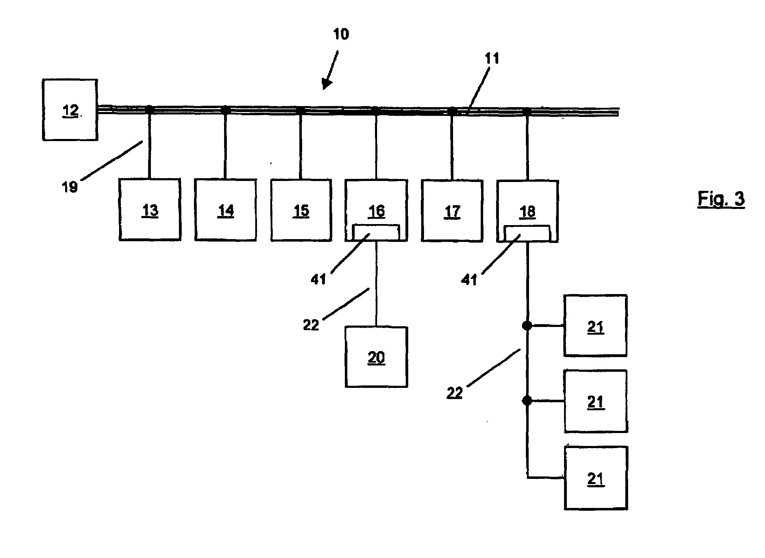

In Fig. 1 ist ein Flussdiagramm eines Verfahrens zum Steuern einer Elektrogeräteanordnung 10 (siehe Fig. 3), insbesondere für ein Möbel, mit einer Buseinrichtung 11 und Busteilnehmern 12...18, wobei die Buseinrichtung 11 zumindest zwei Steuerpfade, zwei Leistungspfade und mindestens einen Freigabepfad aufweist gezeigt.

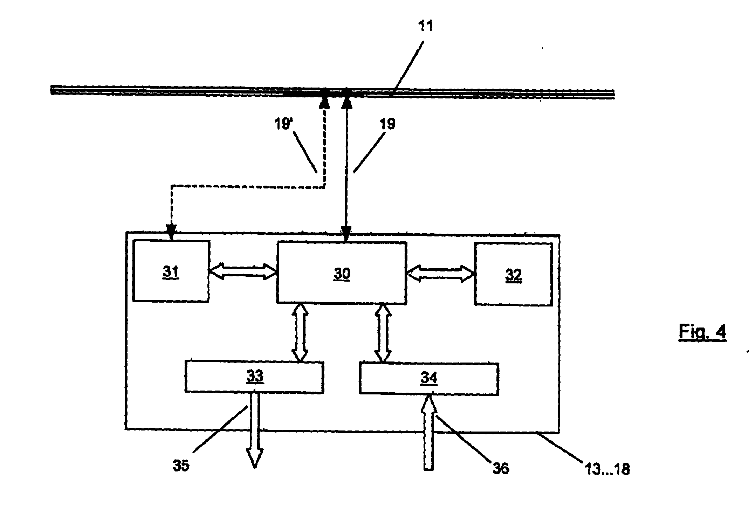

In einem ersten Verfahrensschritt S 1 erfolgt ein Betätigen einer Eingabeeinheit 34 (siehe Fig. 4) eines Busteilnehmers 14, 17, der als Bedienungseinheit benutzt wird. Ein zweiter Verfahrensschritt S2 dient zum Klassifizieren dieses Busteilnehmers 14, 17 mittels eines Freigabepfades als Busteilnehmer 14 mit Masterfunktion oder als ein weiterer Busteilnehmer 17.
Ein Steuern des Busteilnehmers 12, 13, 15...18, der durch die Eingabeeinheit 34 adressiert wird, erfolgt im Verfahrensschritt S3.

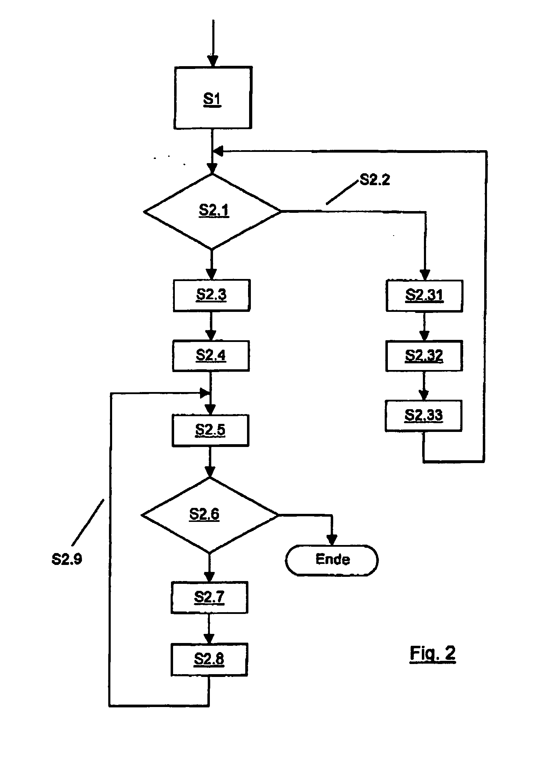

Das Klassifizieren im Verfahrensschritt S2 ist in mehrere Teilschritte aufgeteilt, welche in Fig. 2 in einem weiteren Flussdiagramm dargestellt sind.
Ein Vergleichen eines auf dem Freigabepfad aufgebrachten Signals mit einem vorher festgelegten Wert erfolgt zunächst im Schritt S2.1, woraus sich ein Einstufen als weiterer Busteilnehmer 17 im Schritt S2.2 oder ein Einstufen des Busteilnehmers als Busteilnehmer 14 mit Masterfunktion im Schritt S2.3 anhand des Vergleichens anschließt.

Bei der Einstufung des Busteilnehmers mit der Eingabeeinheit 34, die betätigt wird, als Master, aktiviert dieser den Freigabepfad im Schritt S2.4 durch Aufbringen eines vorher festgelegten Freigabesignals zum Aktivieren aller Busteilnehmer 12...18. Nach Freigabe erfolgt im Teilschritt S2.5 ein Generieren von Adressen für die Busteilnehmer 12...18 und Aussenden dieser Adressen auf der Buseinrichtung 11.

Die Busteilnehmer 12...18 empfangen diese an sie gerichteten Adressen, speichern sie ab und senden sie mit ihren Identitätsdaten im Schritt S2.6 an den anfordernden Busteilnehmer 14 als Master zurück, welcher diese im Schritt S2.7 speichert.

Dabei erfolgt im Teilschritt S2.8 ein Zuordnen bestimmter Programmfunktionen zu den so gespeicherten Adressen und Identitäten. Dieser Vorgang der Teilschritte S2.5 bis S2.8 wird im Schritt S2.9 solange wiederholt, bis alle Busteilnehmer erfasst sind.

Wird der Busteilnehmer mit der betätigten Eingabeeinheit 34 als ein weiterer Busteilnehmer 17 im Schritt S2.31 eingestuft, so empfängt er im Schritt S2.32 eine vom Busteilnehmer 14 mit Masterfunktion zugeteilten Adresse und speichert dieselbe. Darauf gibt er diese ihm zugeteilte Adresse mit einer Identität auf die Buseinrichtung (11) im Schritt S2.33 zum Senden an den Busteilnehmer 14 mit Masterfunktion aus.

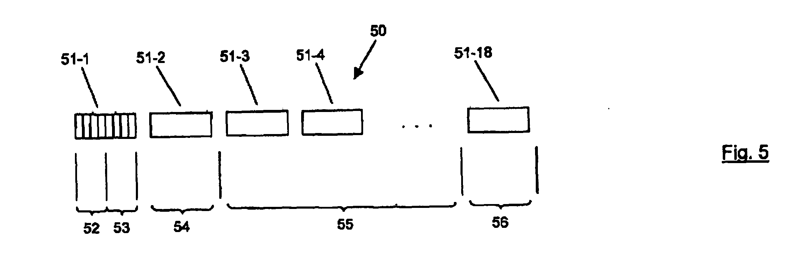

Diese Kommunikation zwischen den einzelnen Busteilnehmern 12...18 erfolgt mittels Datenpakete 50 (siehe Fig. 5) mit einer bestimmten Struktur, die weiter unten noch ausführlich erläutert wird.

Fig. 3 zeigt ein Blockschaltbild eines Ausführungsbeispiels einer erfindungsgemäßen Anordnung zur Durchführung des erfindungsgemäßen Verfahrens.

Die Geräteanordnung 10 besitzt die Buseinrichtung 11, welche als eine RS 485-Schnittstelle mit einem Datenpfad bestehend aus zwei Signalpfaden. Weiterhin weist die Buseinrichtung 11 mindestens zwei Versorgungspfade auf, die von einer Versorgungseinheit 12 mit elektrischer Energie beaufschlagt werden. Die Versorgungseinheit 12 befindet sich am Anfang der Buseinrichtung 11.
Die Buseinrichtung 11 besitzt außerdem mindestens einen Freigabepfad.

An die Buseinrichtung 11 sind an beliebiger Stelle Busteilnehmer 13...18 angeschlossen, indem sie mit den Datenpfaden, den Versorgungspfaden und dem Freigabepfad verbunden sind. Auch die Versorgungseinheit 12 bildet einen Busteilnehmer.
In dem in Fig. 3 dargestellten Beispiel sind folgende Busteilnehmer 13...18 dargestellt; eine PC-Einheit 13, eine erste Bedienungseinheit 14, ein Verbraucher 15, eine erste Steuerung 16, eine zweite Bedienungseinheit 17 und eine zweite Steuerung 18.
Diese Geräteanordnung 10 ist nur beispielhaft gezeigt und kann zum Beispiel eine elektrische Geräteanordnung an einem Pflegebett sein, das nicht dargestellt ist.

Die PC-Einheit 13 ist hier ein Personalcomputer, mit welchem Daten in die Datenpfade der Buseinrichtung 11 eingespeist werden, um zum Beispiel bei Inbetriebnahme oder Wartung der Geräteanordnung 10 eine erstmalige Speicherung von Daten zur Anpassung der elektrischen Geräte in Speichereinheiten der Busteilnehmer vorzunehmen. Dazu gehören zum Beispiel unter anderem auch Tabellen über Hubwege der Antriebe usw. Darüber hinaus kann mit der PC-Einheit 13 oder mit einem tragbaren Programmiergerät die Programme einzelner oder aller Busteilnehmer 13...18 geändert, erneuert oder ausgetauscht werden, was noch weiter im Detail erläutert werden wird.

Die erste Bedienungseinheit 14 ist ein Handschalter, mit welchem sämtliche Funktionen der elektrischen Geräteanordnung 10 gesteuert werden. Er besitzt Ein- und Ausgabefunktionen, die später noch erläutert werden. Weiterhin ist in ihm das Steuerprogramm für die Geräteanordnung vorgesehen. Der Verbraucher 15 ist in diesem Beispiel eine Lampe.

Die erste Steuerung 16 ist für einen ersten Antrieb 20 vorgesehen, welcher zum Beispiel ein Doppelantrieb zur Verstellung eines Lattenrostes des Pflegebetts ist. Die Steuerung weist unter anderem eine Leistungseinheit 41 auf, die mit dem ersten Antrieb 20 verbunden ist. Ihre Funktion wird später noch erläutert.

Eine zweite Bedienungseinheit 17 ist ein so genannter Patientenhandschalter mit eingeschränkter Funktionsweise, das heißt, der in dem Pflegebett befindliche Patient kann nur die für ihn zugelassenen Funktionen der elektrischen Geräteanordnung 10 des Pflegebetts bedienen, zum Beispiel nur die Verstellung des Kopfteils,

Durch Umstecken der zweiten Bedienungseinheit 17 oder Umprogrammieren derselben durch die PC-Einheit 13 lässt sich eine vorteilhaft einfache Anpassung an den jeweiligen Patienten ermöglichen. Durch Weglassen dieser zweiten Bedienungseinheit 17 ist die Geräteanordnung 10 selbstverständlich auch für andere Möbel vorteilhaft einfach zu verwenden.

Die zweite Steuerung 18 besitzt ebenfalls eine Leistungseinheit 41, die mit zweiten Antrieben 21 verbunden ist, welche hier im Ausführungsbeispiel Einzelantriebe zur Höhenverstellung des Bettes sind, die nicht näher erläutert werden.

Auch die Versorgungseinheit 12 ist ein Busteilnehmer.

Über die Buseinrichtung 11 ist eine Synchronisation zum Beispiel der Antriebe 20, 21 möglich.

Jeder Busteilnehmer 12..,18 ist mit einer Prozessorsteuerong ausgerüstet, wie im Zusammenhang mit der Fig. 4 im Folgenden näher beschrieben wird.

Fig. 4 zeigt dazu ein Blockschaltbild eines Ausführungsbeispiels eines Busteilnehmers 13...18.

Der Busteilnehmer 13...18 weist Folgendes auf: eine Steuereinheit 30, vorzugsweise mit einem Prozessor, eine Basis-Steuereinheit 31, eine Speichereinheit 32, eine Ausgabeeinheit 33 mit Ausgängen 35 und eine Eingabeeinheit 34 mit Eingängen 36.

Die Steuereinheit 30 ist mit der Buseinrichtung 11 verbunden, das heißt mit den Daten- und Leistungspfaden sowie mit dem Freigabepfad. In einer anderen Ausführung ist die Basis-Steuereinheit 31 mit der Buseinrichtung 11 direkt verbunden. Die Steuereinheit 30 steht weiterhin mit der Basis-Steuereinrichtung 31, der Speichereinrichtung 32 und den Einrichtungen zur Ausgabe 35 und Eingabe 34 in Verbindung.

In dem Fall, in dem der Busteilnehmer eine Steuerung eines Antriebs 20, 21 ist, ist die Ausgabeeinheit 33 als Leistungseinheit 41 mit einem Ausgang 35 zum Anschluss an den jeweiligen Antrieb 20, 21 ausgebildet, was nicht weiter erläutert wird. Die Eingabeeinheit 34 dient hierbei zum Empfang von Steuersignalen von Messgebem des Antriebs 20, 21, beispielsweise zur Positionserfassung.

Ist der Busteilnehmer eine Bedienungseinheit 14, 17, so ist die Eingabeeinheit 34 mit einer Tastatur verbunden, Diese Tastatur kann auch ein Touchscreen oder ähnliches sein. Die Ausgabeeinheit 33 ist beispielsweise zum Anschluss an einen Anzeigeschirm oder an Kontrollleuchten ausgebildet.

Die Speichereinheit 32 beinhaltet vorher festgelegte Datenwerte, einzeln und in Tabellenform, die auch nachträglich noch durch die PC-Einheit 13 oder bei Betrieb automatisch veränderbar sind. Die festgelegten Datenwerte sind Identitätsinformationen und Angaben zur Leistungsfähigkeit bzw. Funktion des jeweiligen Busteilnehmers.

Im Falle der ersten Bedienungseinheit 14 beinhaltet die Speichereinheit 32 das Steuerprogramm für die Geräteanordnung 10.

Bei einer Inbetriebnahme der Geräteanordnung 10, bzw. Wartung, Reset, Neustart übernimmt die Basis-Steuereinheit 31 den Start des in der Speichereinheit 32 eines jeden Busteilnehmers 12...18 befindlichen Programms, Sie organisiert Updates/Upgrades der Steuersoftware/des Betriebssystems des jeweiligen Busteilnehmers 12...18. Sie wird auch als BIOS bezeichnet, was Basic Input/Output System bedeutet.

In einer anderen Ausführungsform beinhaltet jede Bedienungseinheit 14, 17 eine Speichereinheit 32 und ein Steuerungsprogramm für die Geräteanordnung 10.

Die Steuereinheit 30 überprüft die Datenpfade nach einem Datensatz, der für ihn bestimmt ist, das heißt die Adresse des Busteilnehmers, in dem sich die Steuereinheit 30 befindet. Bei Erhalt eines solchen Datensatzes (wird später erläutert) wird der in ihm übertragene Steuerbefehl, zum Beispiel "Einschalten Lampe" ausgeführt. Bei den Antrieben überwacht die Steuereinheit 30 die Ist-Position des Antriebs und sendet gegebenenfalls Daten darüber mittels der Datenpfade der Buseinrichtung 11 an seinen Befehlsgeber, hier die erste Bedienungseinheit 14, zurück, wobei der Befehlsgeber diese Ist-Position mit Soll-Vergleichswerten der Geräteanordnung vergleicht und den Antrieb durch weitere Steuerbefehle weiterfahren lässt oder abschaltet.

Der jeweilige Busteilnehmer 12...18 kann diese Steuerbefehle jedoch nur ausführen, wenn er über den Freigabepfad freigeschaltet ist. Dazu wird von der ersten Bedienungseinheit 14 der Freigabepfad beispielsweise bei Tastendruck mit einem Signal beaufschlagt, das entweder alle Busteilnehmer 12...18 oder selektiv nur bestimmte freischaltet. Dieses kann durch ein logisches, kodiertes oder periodisches Signal oder durch ein Schaltsignal oder durch ein bestimmtes Potenzial erfolgen. Dabei kann eine Überwachung dieses Signals ausgeführt werden, wodurch beispielsweise auch Kabelbrüche erkannt werden können.

In Weiterführung dieser Ausführungsform können mehrere Freigabepfade vorhanden sein, welche einzelnen Gruppen von Busteilnehmern 13...18 zugeordnet sein können. Dabei können die Freigabepfade ausschließlich in der Buseinrichtung 10 integriert sein oder zusätzlich über einen eigenen Pfad zu den einzelnen Busteilnehmern 13...18 geführt sein.

Eine weitere vorteilhafte Ausführungsform sieht vor, dass die Freigabeleitung die Spannungsversorgung von Schaltorganen beispielsweise von Relais, Mikroprozessoren oder Steuereinheiten 30 der einzelnen Busteilnehmer 13...18 sicherstellt Eine Weiterbildung dieser Ausführungsform sieht eine Bedienungseinheit vor, welche von der Bedienungseinheit 14 räumlich getrennt z.B. in Form einer Schalttafel am Rahmen eines Bettes angeordnet ist und Schalter beinhaltet, welche das Signal der Freigabeleitung schalten.

Gemäß der Erfindung ist vorgesehen, dass jeder Busteilnehmer 13...18 prinzipiell den Datentransfer beobachtet. Werden über einen vorbestimmten Zeitraum keine Daten mehr vom dem als Busteilnehmer ausgebildeten Master gesendet obwohl dennoch ein Signal an dem Freigabepfad anliegt, kann dies ein Merkmal für eine Störung sein. Aus dem Grund ist vorgesehen, dass der Busteilnehmer 13...18 sich selbsttätig deaktiviert und gegebenenfalls ein Signal ausgibt. Dabei ist vorgesehen, dass sich der Busteilnehmer nach Ändern des Zustandes an dem Freigabepfad oder nach Ändern des Zustandes des Datentransfers sich selbsttätig aktiviert.

Bei Tastendruck der ersten Bedienungseinheit 14 wird ein Datenpaket 50 auf die Datenpfade der Buseinrichtung 11 aufgebracht, welches in Fig. 5 dargestellt ist. Dabei kann die erste Bedienungseinheit 14 dadurch definiert sein, dass sie als erster Teilnehmer an der Buseinrichtung 10 in Betrieb genommen wird und somit den Master bildet.

Das Datenpaket 50 besteht in diesem Ausführungsbeispiel aus Bytes 51-1 bis 51-18: einem Adressbyte 52 mit Datenbyteanzahl 53, einem Steuerbyte 54, Datenbytes 55 und einem Prüfbyte 56.

Je nach Art des gesendeten Datenpakets 50 werden mindestens drei Bytes 52 und 53, 54 und 56 übertragen. In diesem Ausführungsbeispiel besteht das Adressbyte 52 aus vier Bit, daraus ergibt sich eine maximale Anzahl von 16 Busteilnehmern. In weiterer Ausgestaltung des gezeigten Beispiels kann jedes Byte aus einzelnen Bits oder mehreren Bytes bestehen, um somit eine individuelle Anpassung der Buseinrichtung realisieren zu können.

Das Adressbyte 52 führt die Adresse des adressierten Busteilnehmers, die Byteanzahl gibt die Anzahl der Bytes 51-1 bis 15-18 des Datenpakets 50 an, das Steuerbyte 54 führt den kodierten Steuerbefehl für den jeweilig adressierten Busteilnehmer, die Datenbytes 55 enthalten zu übertragende Datenwerte und das Prüfbyte 56 dient zur Prüfung des Datenpakets 50, durch eine Checksumme gebildet sein kann, was nicht weiter erläutert wird. Es sei noch angemerkt, dass gemäß des Ausführungsbeispiels die Länge des die Datenbytes 55 aus den Bytes 51-3 bis 51-17 gebildet ist und somit nur beispielhaft 15 Bytes lang ist. Die Länge des Datenbytes richtet sich nach der Menge der zu übertragenden Daten, die beispielsweise bei einem Update erforderlich sind.

Im Folgenden wird die Inbetriebnahme und Initialisierung der Geräteanordnung beschrieben.

In dem hier gezeigten Beispiel werden Busteilnehmer mit gleichen Eigenschaften verwendet, was eine hohe Flexibilität bedeutet. Diese besitzen zur Identifikation unterschiedliche Adressen. Zur Vermeidung von Kodierschaltern in den Busteilnehmern wird ein Daisy-Chain-Pfad benutzt.

Die Vergabe von Adressen erfolgt bei jedem Tastendruck bzw. Setzen des Freigabepfades. Dies hat den Vorteil, dass das ganze System auf volle Funktionsfähigkeit geprüft wird und ein Hinzufügen oder Entfernen von Busteilnehmern automatisch erkannt wird.
Die Buseinrichtung 11 besteht vorzugsweise aus einer RS485-Schnittstelle mit dem zusätzlichen Freigabepfad, der zur Signalisierung dient, dass ein Master die Buseinrichtung 11 belegt hat. Dieser Pfad kann auch für eine Netzfreischaltung genutzt werden. Dabei kann der Master eine Batterie-/Akkurrersorgung aufweisen. Weiterhin wird mit dem Freigabepfad eine Beeinflussung des Betriebszustands eines jeweiligen Busteilnehmers erzielt.

Weiterhin besitzt die Buseinrichtung 11 einen Daisy-Chain-Pfad.

Die Versorgungseinheit 12 ist immer am Anfang der Buseinrichtung 11 angeordnet und setzt den Daisy-Chain-Pfad auf einen bestimmten Wert.

Beim Tastendruck wird geprüft, ob der Freigabepfad ein bestimmtes Signal oder Potenzial führt. Ist dieses nicht vorhanden, wird der Busteilnehmer mit der gedrückten Taste der Master. Ist schon ein Master vorhanden, signalisiert dies der Freigabepfad. Dann wartet der Busteilnehmer ab, bis der vorhandene Master ihn unter seiner Busadresse anspricht. Der Busteilnehmer speichert alle Adressen mit der Zuweisung aller Busteilnehmer.

Ist der Busteilnehmer der Master, so setzt er den Freigabepfad auf ein bestimmtes Signal, wodurch alle Busteilnehmer eine Initialisierung durchführen. Der Daisy-Chain-Pfad wird auf einen bestimmten Wert gesetzt.
Innerhalb einer bestimmten Zeit müssen alle Busteilnehmer betriebsbereit sein, zum Beispiel 10 ms.

Der Busteilnehmer, der direkt nach der Versorgungseinheit angeschlossen ist, hat an seinem Daisy-Chain-Eingang den bestimmten Datenwert der Versorgungseinheit 12. Dieser Busteilnehmer reagiert auf die Adresse und antwortet mit seiner Identität und speichert die Adresse, mit der er angesprochen wurde. Eine Ausnahme besteht, wenn der Master dieser Busteilnehmer ist, dann weist er sich selbst die Adresse zu und sendet seine Identität auf die Buseinrichtung 11 und fragt nach dem nächsten Busteilnehmer. So werden allen Busteilnehmer erfasst und der Master beendet die Initialisierung nach Erhalt der letzten Antwort nach einem bestimmten Zeitabschnitt von zum Beispiel 10 ms oder wenn nach einer vorgegebenen Zeitspanne keine Antwort mehr kommt.

Beispielsweise können über eine auf Text und/oder Grafik basierende Bildschirmoberfläche einem vorbestimmten Taster einer Bedienungseinheit mittels Tastatur- und/oder Mauseingabe ein Funktionsablauf, einer oder mehrere Parameter und die zu betreibenden Verbraucher zugeordnet werden.

Ist die Eingabe erfolgt, kann direkt mit dem Programmiergerät der Funktionsablauf simuliert oder bis auf weiteres in der Speichereinheit abgelegt werden. Dazu ist in vorteilhafter Ausführung vorgesehen, dass nach erfolgter Eingabe eine Konvertierung der Daten erfolgt, so dass als Ergebnis das Script erzeugt ist. Alternativ hierzu kann das Script auch manuell programmiert werden.

Anschließend wird das Script erneut konvertiert und in Datenform in der Speichereinheit abgelegt. Sollen die in der Speichereinheit abgelegten Werte beispielsweise auf einem Bildschirm sichtbar gemacht werden, erfolgen die zuvor beschriebenen Schritte in umgekehrter Reichenfolge derart, dass zunächst aus der Datenform eine Konvertierung zu einem Script erfolgt und anschließend eine Konvertierung zu einer auf Grafik und/oder Text basierenden Anzeige erfolgen kann. Dabei übernimmt in einer bevorzugten Ausführungsform wie oben schon erwähnt ein Programmierprogramm des Programmiergerätes neben den Konvertierungen auch die Programmierung bzw. die Erstellung der Scripte.

Im Folgenden wird eine solche Programmierung in beispielhafter Weise mit der der PC-Einheit 13 beschrieben. In diesem Beispiel arbeitet das Steuerungsprogramm so genannte einzelne Scripte ab, zum Beispiel Unterprogramme und/oder auch Makros. Jedes Script kann rein individuell und flexibel gestaltet sein, um sowohl einfache als auch komplexe Steuerungs- und Regelungsabläufe realisieren zu können. Die Größe des Scriptes ist dabei durch die Speicherkapazität des der Speichereinheit begrenzt.

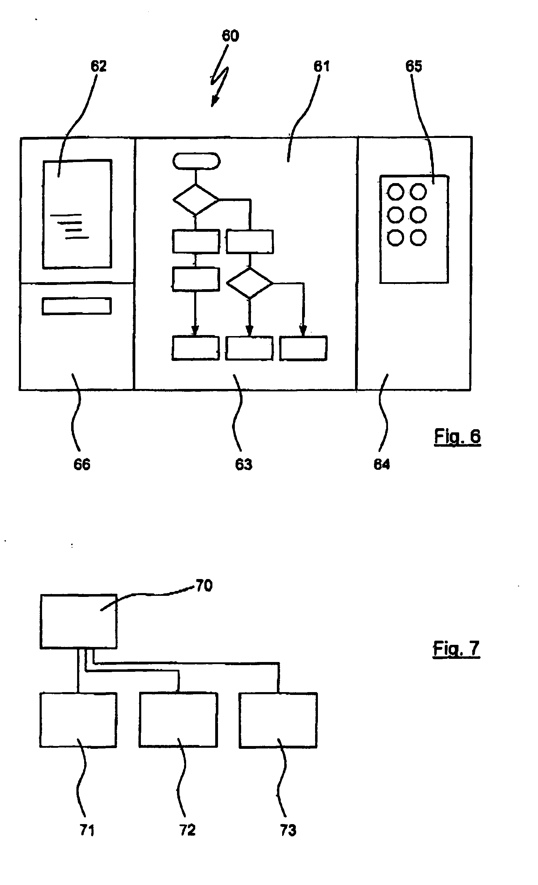

Die Programmierung einzelner Scripte kann vollautomatisch erfolgen. Hierzu dient ein übergeordnetes Programm mit einer Programmieroberfläche 60 zur Scriptprogrammierung, wie sie in Fig. 6 schematisch gezeigt ist. Die Programmieroberfläche 60 besteht hier aus einer Maske 61. Die Maske 61 weist beispielsweise folgende Abschnitte auf: einen Menüabschnitt 62, einen Funktionsabschnitt 63, einen Bildabschnitt 64 und einen Statusabschnitt 66. Die Maske 61 ist selbstverständlich nicht auf diese Abschnitte eingeschränkt.

Im Funktionsabschnitt 63 sind verschiedene Funktionen abrufbar, die mit Termen aus dem Menüabschnitt 62, wie zum Beispiel "Rücken hoch", "Fuß runter" usw., kombinierbar sind, indem diese Terme aus dem Menüabschnitt 62 in vorteilhaft einfacher Weise in den Funktionsabschnitt 63 per Mausklick herübergezogen werden können. Der Bildabschnitt 64 zeigt dazu ein passendes Bild 65, zum Beispiel eine Tastatur einer Bedienungseinheit 14, 16, deren Bedienelemente jeweils bei einer aufgerufenen Funktion diese visualisieren, indem sie blinken oder dergleichen. Auch eine Zuordnung erstellter Programme zu bestimmten Bedienelementen auf dem Bild 65 ist durch Mausklick und Herüberziehen möglich.

Mittels des Funktionsabschnitts 63 können die Terme des Menüabschnitts 62 zu einem Programm zusammengestellt werden. Dazu gibt es folgende Möglichkeiten. Ein Flussdiagramm, wie in Fig. 6 beispielhaft gezeigt, wird auf der Programmieroberfläche 60 mit den üblichen Mitteln wie Maus oder Touchscreen zusammengestellt. Weiterhin ist es auch möglich, ein Programm mit Anweisungen in Textform über eine Tastatur zu erstellen. Eine Umwandlung von Anweisungstext in Flussdiagramm und umgekehrt ist ebenfalls vorgesehen. Notwendige Parameter, wie zum Beispiel Hub, Geschwindigkeit und dergleichen, werden jeweils über Tastatur oder aus dem Menüabschnitt 62 mit Mausklick eingebunden.

Der Statusabschnitt 66 dient zur weiteren Information über Parameter, Einstellungen und dergleichen.

Die weitere Funktion wird nun anhand von Fig. 7 beschrieben.

In Fig. 7 ist zur weiteren Erläuterung der Programmierung ein schematisches Blockschaltbild dargestellt. Ein Programmierblock 70 ist mit einer Eingabeeinrichtung 71, einer Ausgabeeinrichtung 72 und einer Speichereinrichtung 73 verbunden. Der Programmierblock 70 ist eine Programmiersoftware innerhalb der PC-Einheit 13, in einem Programmiergerät oder auch in einem Gerät der Buseinrichtung 11, zum Beispiel in einer Bedienungseinheit 14, 17. Die Eingabeeinrichtung 71 ist die Programmieroberfläche 60 nach Fig. 6 und die Speichereinrichtung 73, in welchem beispielsweise unter anderem auch die grafischen Symbole für Maske 61 und auch andere Masken abgelegt sind, ist ein Speicherbereich der PC-Einheit 13 oder des Programmiergerätes.

Das im Funktionsabschnitt 63 der Programmieroberfläche 60 erstellte Programm in Form eines Flussdiagramms wird von der Programmiersoftware im Programmierblock 70 automatisch in ein Script konvertiert, welches in die Buseinrichtung 11 einspeisbar ist. Dabei wird im Programmierblock 70 zunächst das Flussdiagramm in Befehlsanweisungen umgewandelt, aus denen das Programm erzeugt wird, aus welchem dann das Script erstellt wird. Mit der Programmieroberfläche 60 wird das Erstellen von Scripts für die Steuerung der Buseinrichtung 11 vorteilhaft einfacher, schneller und effizienter. Eine relativ hohe Fehlerwahrscheinlichkeit wie bei einer üblichen Texteingabe von Programmieranweisungen durch Tippfehler wird damit behoben. Nur die Ablauflogik für das Programm bzw. das Script wird in der Kommunikationsebene zwischen Mensch und Maschine visualisiert und als Flussdiagramm dargestellt. Die Ablauflogik kann somit grafisch gestaltet werden, wobei die meisten Parameter und Wahlmöglichkeiten durch den Menüabschnitt 62 schon vorgegeben werden und nur noch mit Mausklick in das Flussdiagramm im Funktionsabschnitt 63 übernommen werden müssen. Damit ist eine vorteilhaft einfache Programmierung und/oder Änderung durch jede Fachkraft ermöglicht, wobei sich auch eine vorteilhafte Zeiteinsparung ergibt, da zum Beispiel eine Fehlersuche durch geringere Fehlerwahrscheinlichkeit verkürzt wird.

Die Erfindung ist nicht auf das oben Beschriebene beschränkt, sondern auf vielfältige Art und Weise modifizierbar.

So kann zum Beispiel eine elektromotorische Antriebseinheit 40 oder ein Verbraucher 15 als ein Busteilnehmer ausgebildet sein und die Steuerung 16 mit der Leistungseinheit 41 aufweisen.

Die Buseinrichtung 11 kann zum Beispiel als Daisy-Chain-Verkettung ausgebildet sein. Ferner kann die Buseinrichtung 11 nach Art eines CAN-Bus aufgebaut sein.

Der Freigabepfad kann zur so genannten Erstfehlersicherheit dienen, indem eine Taste der Master-Bedienungseinheit 14 den Freigabepfad direkt schaltet. In dem Fall, in dem keine Erstfehlersicherheit gefordert wird, kann dazu eine Logik bzw. der Prozessor des Masters den Freigabepfad schalten.

Der Freigabepfad kann eine Netzfreischaltung in der Versorgungseinheit 12 bzw. als weiteren Busteilnehmer schalten. Es ist auch möglich, dass der Freigabepfad die Busteilnehmer zwischen einem Betriebs- und einem Nichtbetriebsmodus zur Energieeinsparung umschaltet.

Ferner kann der Freigabepfad auf die Steuereinheit 30 oder den Ausgang 35 derart einwirken, dass beim Fehlen des Freigabesignals der Ausgang 35 nicht geschaltet wird, um beispielsweise ein unbeabsichtigtes Anlaufen beispielsweise eines Motors eines Antriebs oder eines Einschalten eines Verbrauchers 15, 20, 21, 40 zu verhindern. Ferner kann die Steuereinheit 30 jedes Busteilnehmers 13...18 nach einer vorgegebenen Zeitspanne, nach welcher keine Datenpakete empfangen werden, den Ausgang 35 deaktivieren.

Die Steuereinheiten 31 der Busteilnehmer mit Ausnahme des Masters werden nur bei Tastendruck des Masters mit Energie versorgt.

Es ist auch denkbar, dass die Datenpfade der Buseinrichtung 11 drahtlos ausgebildet sind und zum Beispiel ein Bluetooth- oder DECT-Netz analog einer WLAN-Einrichtung bilden. Dann sind nur die Versorgungs- bzw. Leistungspfade in Form von zwei Leitungen zu den Busteilnehmern, insbesondere Antriebseinheiten und Verbraucher wie Lampen usw. notwendig. Die Bedienungseinheiten können dann mit Batterie oder Akku versorgt sein. Sie können auch zum Beispiel in einem Mobiltelefon integriert sein.

Auch ein Sensor oder ein Schalter können Busteilnehmer sein.
Im Falle des Betriebes mindestens eines Busteilnehmers 13...18 mit einem Akkumulator schaltet das Signal der Freigabeleitung den jeweiligen Busteilnehmer 13...18 oder zumindest die Steuereinheit 30 zwischen einem Betriebsmodus und einem stromsparenden Schlafmodus.

Es ist ebenfalls denkbar, dass die Programmieroberfläche 60 auch bei Steuerungen Verwendung finden kann, die keine Busstruktur aufweisen.

### Bezugszeichenliste

- 10: Elektrogeräteanordnung
- 11: Buseinrichtung
- 12: Versorgungseinheit
- 13: PC-Einheit (Busteilnehmer)
- 14: Erste Bedienungseinheit (Busteilnehmer)
- 15: Verbraucher (Busteilnehmer)
- 16: Erste Steuerung (Busteilnehmer)
- 17: Zweite Bedienungseinheit (Busteilnehmer)
- 18: Zweite Steuerung (Busteilnehmer)
- 19,19': Busverbindung
- 20: Erster Antrieb
- 21: Zweiter Antrieb
- 22: Antriebsverbindung
- 30: Steuereinheit
- 31: Basis-Steuereinheit
- 32: Speichereinheit
- 33: Ausgabeeinheit
- 34: Eingabeeinheit
- 35: Ausgang
- 36: Eingang
- 40: Antriebseinheit
- 41: Leistungseinheit
- 50: Datenpaket
- 51-1...-18: Bytes
- 52: Adressbyte
- 53: Byteanzahl
- 54: Befehlsbyte
- 55: Datenbyte
- 56: Prüfbyte
- 60: Programrnieroberiläche
- 61: Maske
- 62: Menüabschnitt
- 63: Funktionsabschnitt
- 64: Bildabschnitt
- 65: Bild
- 66: Statusabschnitt
- 70: Programmierblock
- 71: Eingabeeinrichtung
- 72: Ausgabeeinrichtung
- 73: Speichereinrichtung
- S1...3,:
- S2.1...9:
- S2.31...33: Verfahrensschritte

## Patentansprüche

1. Verfahren zum Programmieren und Steuern einer Elektrogeräteanordunng (10) eines Möbels, wobei zum Programmieren von Funktionen und zum Steuern der Elektrogeräteanordnung (12...18) eine grafische Programmieroberfläche (60) verwender wird, welche auf einer Anzeigeeinrichtung einer PC-Einheit (13) oder eines anderen Programmiergerätes angezeigt wird, wobei die grafische Programmicroberfläche (60) mindestens Folgendes aufweist:
einen Menüabschnitt (62) zur Funktionsauswahl;
einen Funktionsabschnitt (63) zur Zusammenstellung von Programmen;
einen Bildabschnitt (64) zur Anzeige von Bildern (65); und
einen Statusabschnitt (66) zur Statusanzeige,
wobei die Elektrogeräteanordnung umfasst:
eine Buseinriehtung (11) mit einem Datenpfad mit zwei Signalpfaden, zumindest zwei Versorgungspfaden und zumindest einem Freigabepfad; und
Busteilnehmer (12...18), welche mit der Buseinrichtung (11) verbunden sind;
wobei jeder der Busteilnehmer (12...18) einen Datentransfer auf dem Datenpfad beobachtet,
**dadurch gekennzeichnet, dass** in dem Fall, wenn von einem als Busteilnehmer (12...18) ausgebildeten Master über einen vorbestimmten Zeitraum keine Daten mehr gesendet werden, obwohl ein Signal auf dem zumindest einen Freigabepfad vorhanden ist, der jeweilige Busteilnehmer (12...18) dies als Merkmal einer Störung erkennt und sich selbsttätig deaktiviert.

2. Vorfahren nach Anspruch 1, **dadurch gekennzeichnet, dass** der jeweilige Busteilnehmer (12...18) bei selbsttätiger Deaktivierung ein Signal ausgibt.

3. Verfahren nach Anspruch 1 oder 2, **dadurch gekennzeichnet, dass** der jeweilige Busteilnehmer (12...18) nach selbsttätiger Deaktivierung sich wieder aktiviert, wenn der Zustand an dem Freigabepfad oder der Zustand des Datentransfers sich ändert.

4. Verfahren nach einem der vorhergehenden Ansprüche, **dadurch gekennzeichnet, dass** Terme aus dem Menüabschnitt (62) in den Funktionsabschnitt (63) mittels grafischer Bedienelemente, vorzugsweise Maus und/oder Touchscreen, übernommen werden.

5. Verfahren nach Anspruch 4, **dadurch gekennzeichnet, dass** in dem Funktionsabschnitt (63) dargestellte und/oder zusammengestellte Programme oder Programmabschnitte mittels grafischer Bedienelemente, vorzugsweise Maus und/oder Touchscreen, zumindest einem Bild (65) oder Abschnitte davon auf dem Bildabschnitt (64) zugeordnet werden.

6. Verfahren nach einem der vorstellenden Ansprüche, **dadurch gekennzeichnet, dass** die grafische Programmieroberfläche (60) Scripte zum Steuern von Busteilnehmern (12...18) eines Busses erzeugt.

7. Vorrichtung zur Durchführung des Verfahrens nach einem der Ansprüche 1 bis 46, mit:
einer grafischen Programmieroberfläche (60), die auf einer Anzeigeeinrichtung einer PC-Einheit (13) oder eines anderen Programmiergerätes angezeigt wird; und;
einer Elektrogeräteanordnung, umfassend:
eine Buseinrichtung (11) mit einem Datenpfad mit zwei Signalpfaden, zumindest zwei Versorgungspfaden und zumindest einem Freigabepfad; und
Busteilnehmer (12...18), welche mit der Buseinrichtung (11) verbunden sind;
wobei jeder der Busteilnehmer (12...18) einen Datentransfer auf dem Datenpfad beobachtet,
**dadurch gekennzeichnet, dass** der jeweilige Busteilnehmer (12...18) so ausgebildet ist, dass er in dem Fall, wenn von einem als Busteilnehmer (12...18) ausgebildeten Master über einen vorbestimmten Zeitraum keine Daten mehr gesendet werden, obwohl ein Signal auf dem zumindest einen Freigabepfad vorhanden ist, dies als Merkmal einer Störung erkennt und sich selbsttätig deaktiviert.

## Claims

1. Method for programming and controlling an arrangement of electrical devices (10) in a piece of furniture, a graphical programming interface (60) being used to program functions and control the arrangement of electrical devices (12...18), which programming interface is displayed on a display device of a PC unit (13) or another programming device, the graphical programming interface (60) having at least the following:
a menu section (62) for selecting functions;
a function section (63) for compiling programs;
an image section (64) for displaying images (65); and
a status section (66) for displaying the status,
the arrangement of electrical devices comprising:
a bus device (11) having a data path with two signal paths, at least two supply paths and at least one enabling path; and
bus subscribers (12...18) which are connected to the bus device (11);
each of the bus subscribers (12...18) monitoring data transfer on the data path,
**characterized in that**, if a master which is in the form of a bus subscriber (12...18) no longer transmits any data over a predetermined period of time even though there is a signal on the at least one enabling path, the respective bus subscriber (12...18) recognizes this as a feature of a fault and automatically deactivates itself.

2. Method according to Claim 1, **characterized in that** the respective bus subscriber (12...18) outputs a signal upon automatic deactivation.

3. Method according to Claim 1 or 2, **characterized in that** the respective bus subscriber (12...18) activates itself again, following automatic deactivation, when the state on the enabling path or the state of data transfer changes.

4. Method according to one of the preceding claims, **characterized in that** terms from the menu section (62) are adopted into the function section (63) by means of graphical control elements, preferably a mouse and/or a touch screen.

5. Method according to Claim 4, **characterized in that** programs or program sections displayed and/or compiled in the function section (63) are assigned to at least one image (65) or sections of the latter in the image section (64) by means of graphical control elements, preferably a mouse and/or a touch screen.

6. Method according to one of the preceding claims, **characterized in that** the graphical programming interface (60) generates scripts for controlling bus subscribers (12...18) of a bus.

7. Apparatus for carrying out the method according to one of Claims 1 to 6, having:
a graphical programming interface (60) which is displayed on a display device of a PC unit (13) or another programming device; and
an arrangement of electrical devices comprising:
a bus device (11) having a data path with two signal paths, at least two supply paths and at least one enabling path; and
bus subscribers (12...18) which are connected to the bus device (11);
each of the bus subscribers (12...18) monitoring data transfer on the data path,
**characterized in that** the respective bus subscriber (12...18) is designed in such a manner that, if a master which is in the form of a bus subscriber (12...18) no longer transmits any data over a predetermined period of time even though there is a signal on the at least one enabling path, it recognizes this as a feature of a fault and automatically deactivates itself.

## Revendications

1. Procédé pour programmer et commander un agencement d'appareils électriques (10) d'un meuble, dans lequel, pour la programmation de fonctions et pour la commande de l'agencement d'appareils électriques (12...18), on utilise une surface de programmation (60) graphique qui est affichée sur un dispositif d'affichage d'une unité de PC (13) ou d'un autre appareil de programmation, la surface de programmation (60) graphique présentant au moins les éléments suivants :
une partie menu (62) pour le choix des fonctions ;
une partie fonction (63) pour la réalisation de programmes ;
une partie image (64) pour l'affichage d'images (65) ; et
une partie état (66) pour l'affichage d'état
l'agencement d'appareils électriques comprenant :
un dispositif de bus (11) avec un chemin de données avec deux chemins de signal, au moins deux chemins d'alimentation et au moins un chemin de validation ; et des abonnés de bus (12...18), qui sont reliés au dispositif de bus (11) ; chacun des abonnés de bus (12...18) observant un transfert de données sur le chemin de données,
**caractérisé en ce que**,
dans le cas où aucune donnée n'est plus envoyée par un maître conçu comme abonné de bus (12...18) pendant une période prédéfinie, bien qu'un signal soit présent sur le au moins un chemin de validation, l'abonné de bus (12...18) concerné détecte ceci comme caractéristique d'un incident et se désactive automatiquement.

2. Procédé selon la revendication 1, **caractérisé en ce que** l'abonné de bus (12...18) concerné émet un signal en cas de désactivation automatique.

3. Procédé selon la revendication 1 ou 2, **caractérisé en ce que** l'abonné de bus (12...18) respectif se réactive après désactivation automatique lorsque l'état sur le chemin de validation ou l'état du transfert de données change.

4. Procédé selon l'une quelconque des revendications précédentes, **caractérisé en ce que** des termes provenant de la partie menu (62) sont repris dans la partie fonction (63) au moyen d'éléments de commande graphiques, de préférence souris et/ou écran tactile.

5. Procédé selon la revendication 4, **caractérisé en ce que** des programmes ou des parties de programme présentées et/ou établies dans la partie fonction (63) sont attribués au moyen d'éléments de commande graphiques, de préférence souris et/ou écran tactile, à au moins une image (65) ou des parties sur la partie image (64).

6. Procédé selon l'une quelconque des revendications précédentes, **caractérisé en ce que** la surface de programmation (60) graphique génère des scripts pour la commande d'abonnés de bus (12...18) d'un bus.

7. Dispositif pour mettre en oeuvre le procédé selon l'une quelconque des revendications 1 à 6, comprenant :
une surface de programmation (60) graphique, qui est affichée sur un dispositif d'affichage d'une unité de PC (13) ou d'un autre appareil de programmation ; et
un agencement d'appareils électriques comprenant
- un dispositif de bus (11) avec un chemin de données avec deux chemins de signal, au moins deux chemins d'alimentation et au moins un chemin de validation ; et
- des abonnés de bus (12...18) qui sont reliés au dispositif de bus (11);
chacun des abonnés de bus (12...18) observant un transfert de données sur le chemin de données,
**caractérisé en ce que** l'abonné de bus (12... 18) respectif est conçu de telle sorte que, dans le cas où aucune donnée n'est plus envoyée par un maître conçu comme abonné de bus (12... 18) dans un cadre prédéfini, bien qu'un signal soit présent sur le au moins un chemin de validation, il identifie ceci comme la caractéristique d'un incident et se désactive automatiquement.
